# EUROPEAN PATENT APPLICATION

(11) **EP 4 539 214 A1**
(43) Date of publication of application: **16.04.2025**
(21) Application number: 24193709.3
(22) Date of filing: 08.08.2024
(51) Int. Cl.: H01M 50/103, H01M 50/152, H01M 50/179, H01M 50/184, H01M 50/186, H01M 50/188, H01M 50/193, H01M 50/593

(54) **BATTERY**

(30) Priority: 08.08.2023 CN 202322142120 U; 18.07.2024 WO PCT/CN2024/106141
(71) Applicant: Eve Power Co., Ltd., Jingmen, Hubei 448000 (CN)
(72) Inventor: ZHANG, Lei, Jingmen, Hubei, 448000 (CN); ZHAO, Fenfen, Jingmen, Hubei, 448000 (CN); LI, Qiaoying, Jingmen, Hubei, 448000 (CN); HONG, Youmin, Jingmen, Hubei, 448000 (CN)
(74) Representative: Murgitroyd & Company

(57) **Abstract**

The present disclosure provides a battery (100), including a housing (10), a pole (20), and a sealing component (30). The housing includes an end plate (12) provided with a first through hole (101) and a lateral wall (11). The pole includes a pole connecting part (21) passing through the first through hole and a pole limiting part (23) provided on the pole connecting part and located on a side of the end plate close to the lateral wall. The sealing component includes a first and second sealing parts. The first sealing part (31) is arranged around the pole connecting part and located between the pole limiting part and the end plate. The second sealing part (32) is connected to the first sealing part, arranged around the pole connecting part, and interference-fitted with the first through hole. The first sealing part is provided with a recess configured to provide a deformation space when the first sealing part is squeezed.

## Description

### TECHNICAL FIELD

The present disclosure relates to a technical field of battery technologies, and in particular, to a battery.

### BACKGROUND

In related arts, in order to ensure sealing between a pole and a housing of a battery, it is generally necessary to provide a sealing component between the pole and the housing.

However, as an internal temperature of the battery increases during operation, the pole tends to expand, causing the pole to squeeze the sealing component and other components of the battery. The sealing component and other components of the battery are squeezed out of shape, resulting in insulation failure of the battery, and the insulation failure of the battery affects the stability.

### SUMMARY

Embodiments of the present disclosure provide a battery, which may improve the technical problem of insulation failure of the battery caused by expansion of the pole.

Embodiments of the present disclosure provides a battery. The battery includes a housing, a pole, and a sealing component. The housing includes a lateral wall and an end plate connected to the lateral wall and provided with a first through hole. The pole includes a pole connecting part and a pole limiting part. The pole connecting part passes through the first through hole, the pole limiting part is provided on a first end of the pole connecting part, and the pole limiting part is located on a side of the end plate close to the lateral wall. The sealing component includes a first sealing part and a second sealing part. The first sealing part is arranged around the pole connecting part and located between the pole limiting part and the end plate, and a first end of the second sealing part is connected to the first sealing part. The second sealing part is arranged around the pole connecting part, and the second sealing part is interference-fitted with an inner sidewall of the first through hole. At a position close to a connection between the first sealing part and the second sealing part, the first sealing part is provided with at least one recess on a side surface away from the first end of the pole connecting part, and the recess is configured to provide a deformation space when the first sealing part is squeezed.

Beneficial effects of the embodiments of the present disclosure:

In embodiments of the utility model, the first sealing part of the sealing component is arranged around the pole connecting part and is located between the pole limiting part of the pole and the end plate, and the second sealing part of the sealing part is arranged around the pole connecting part and passes through the first through hole of the housing. At the position close to the connection between the first sealing part and the second sealing part, the at least one recess is provided on a surface of the first sealing part away from the pole connecting part, an arrangement of the recess provides an accommodation space for deformation at the connection between the first sealing part and the second sealing part. When the pole expands to squeeze the first sealing part, the first sealing part is first deformed at the recess to relieve compression on the first sealing part due to expansion of the pole, thereby relieving the overall sealing component from directly squeezing other components of the battery, and improving the stability of the battery.

### BRIEF DESCRIPTION OF THE DRAWINGS

FIG. 1 is a perspective view of a battery provided by some embodiments of the present application.
FIG. 2 is a structural view of a pole of a battery provided by some embodiments of the present application.
FIG. 3 is an exploded view of FIG. 2.
FIG. 4 is a first structural view of a sealing component in FIG. 2.
FIG. 5 is a second structural view of the sealing component in FIG. 2.
FIG. 6 is an enlarged view of circle A in FIG. 2.
FIG. 7 is an enlarged view of circle B in FIG. 2.
FIG. 8 is an enlarged view of circle C in FIG. 2.

Explanation of reference symbols:
100, battery; 10, housing; 11, lateral wall; 12, end plate; 101, first through hole; 102, third accommodation groove; 20, pole; 21, pole connecting part; 22, pole limiting part; 23, pole riveting part;
30, sealing component; 31, first sealing part; 32, second sealing part; 3101, recess; 40, riveting component; 401, first accommodation groove; 402, second accommodation groove; 50, outer insulation component; 501, third through hole; 60, inner insulation component; 601, second through hole; 70, adapting piece; D1, first reserved gap; D2, second reserved gap; D3, third reserved gap.

### DETAILED DESCRIPTION

In the description of the present disclosure, unless otherwise explicitly stipulated and limited, the terms "connected", "connecting", and "fixed" should be understood in a broad sense. For example, it may be a fixed connection, a detachable connection, or an integral body; it may be a mechanical connection or an electrical connection; it may be a direct connection or an indirect connection through an intermediary; it may be an internal connection between two elements or an interaction between two elements. For those of ordinary skill in the art, the specific meanings of the above terms in the present disclosure may be understood based on specific circumstances.

In the present disclosure, unless otherwise expressly stated and limited, that a first feature is "above" or "below" a second feature may include direct contact between the first and second features, or may also include that the first and second features are not in direct contact but through additional characteristic contact between them. Furthermore, that the first feature is "on", "above", or "over" the second feature may include that the first feature is directly above and diagonally above the second feature, and the first feature has a horizontal height higher than that of the second feature. That the first feature is "under" or "below" the second feature may include that the first feature is directly below and diagonally below the second feature, and the first feature has a horizontal height lower than that of the second feature.

In the description of the embodiments, orientations or positional relationships indicated by the terms "upper", "lower", "left", "right", "front", "rear" etc. are based on the orientations or positional relationships illustrated in the drawings, the terms are intended to facilitate description and simplify operation, and are not intended to indicate or imply that the device or element referred to must have a specific orientation, be constructed and operate in a specific orientation, and therefore cannot be construed as a limitation of the present disclosure. In addition, the terms "first" and "second" are used to differentiate in description and have no special meaning.

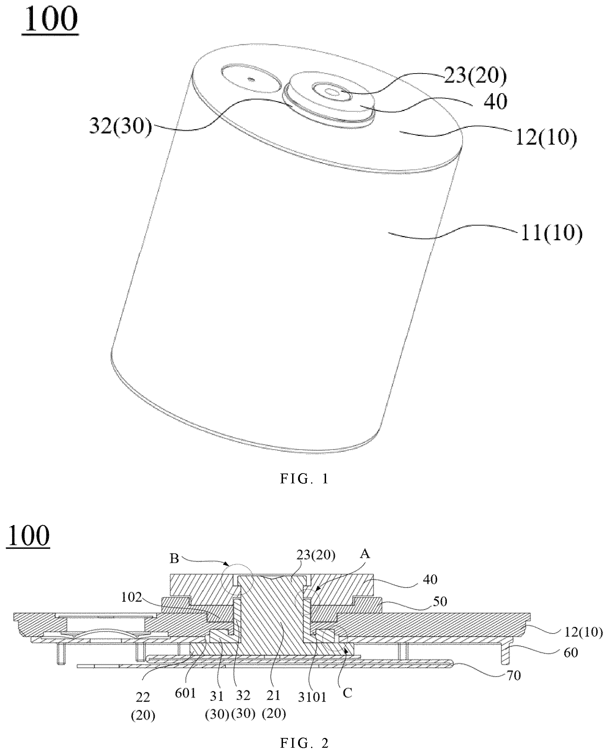

As illustrated in FIG. 1, FIG. 2, and FIG. 3, the embodiments provide a battery 100. The battery 100 includes a housing 10, a pole 20, and a sealing component 30.

The housing 10 includes a lateral wall 11 and an end plate 12 connected to the lateral wall 11. The lateral wall 11 and the end plate 12 are connected to form a hollow housing 10. The hollow housing 10 is configured to accommodate a battery cell, and a tab at an end of the battery cell is connected to an adapting piece. The end plate 12 is provided with a first through hole 101. The first through hole 101 allows the pole 20 to pass from the inside to the outside of the housing 10, so that one end of the pole 20 is connected to the adapting piece 70, and the other end of the pole 20 is located outside the housing 10. The housing 10 may be made of aluminum material. The housing 10 made of aluminum material has high specific strength, specific modulus, fracture toughness, fatigue strength, and corrosion resistance stability, and has the advantages of light weight and stable molding.

The lateral wall 11 illustrated in FIG. 1 is cylindrical, and the cylindrical lateral wall 11 and the end plate 12 are connected to form a cylindrical housing 10. The lateral wall 11 may also be in the shape of a quadrangular prism, and the quadrangular prism lateral wall 11 and the end plate 12 are connected to form a square housing 10.

The pole 20 includes a pole connecting part 21 and a pole limiting part 22. The pole connecting part 21 passes through the first through hole 101, and the pole limiting part 22 is provided on a first end of the pole connecting part 21. The pole limiting part 22 is located in the housing 10. The pole limiting part 22 is located on a side of the end plate 12 close to the lateral wall 11.

A diameter of the pole connecting part 21 ranges from 3.0 mm to 6.5 mm. The diameter of the pole connecting part 21 may be specifically 3.0 mm, 3.5 mm, 4.0 mm, 4.5 mm, 5.0 mm, 5.5 mm, 6.0 mm, or 6.5 mm.

The sealing component 30 includes a first sealing part 31 and a second sealing part 32. The first sealing part 31 is provided around the pole connecting part 21, and the first sealing part 31 is located between the pole limiting part 22 and the end plate 12. A first end of the second sealing part 32 is connected to the first sealing part 31, and the second sealing part 32 is arranged around the pole connecting part 21. The second sealing part 32 passes through the first through hole 101 so that the second sealing part 32 can seal a part of the pole connecting part 21 provided outside the housing 10. The second sealing part 32 is interference-fitted with an inner sidewall of the first through hole 101. At a position close to a connection between the first sealing part 31 and the second sealing part 32, the first sealing part 31 is provided with at least one recess 3101 on a side surface away from the first end of the pole connecting part 21.

The recess 3101 is configured to provide a deformation space when the first sealing part 31 is squeezed. That is to say, an arrangement of the recess 3101 provides an accommodation space for deformation at the connection between the first sealing part 31 and the second sealing part 32. Therefore, when the pole 20 expands to squeeze the sealing component 30, the sealing component 30 is first deformed at the recess 3101 to relieve the sealing component 30 from directly squeezing other components of the battery 100 being in contact with the sealing component 30 due to the expansion force of the pole 20. For example, directly squeezing a hole wall of the first through hole 101 is relieved, thereby reducing the deformation of the end plate 12 and reducing the impact on the overall sealing of the housing 10, and reducing the impact on the stability of the battery 100.

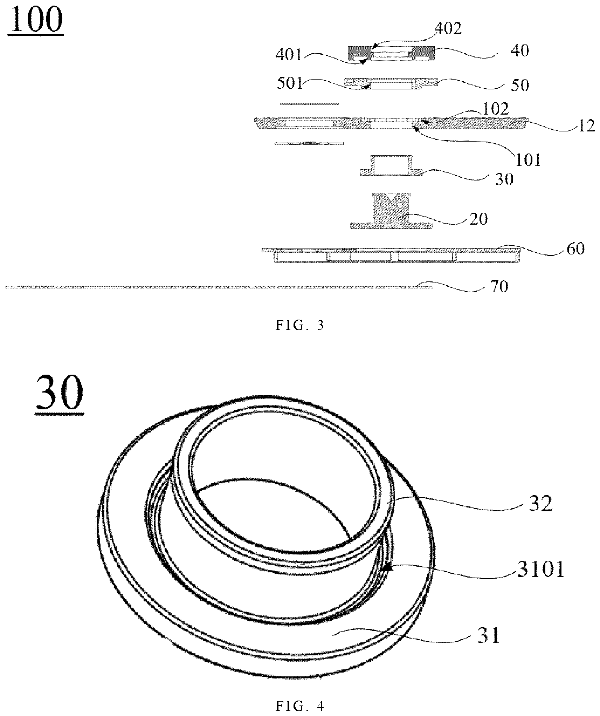

As illustrated in FIG. 4, the recess 3101 is arranged around an outer periphery of the second sealing part 32. That is, the recess 3101 and the second sealing part 32 are co-centrically arranged, so that the recess 3101 arranged along the outer periphery of the second sealing part 32 accommodates deformation occurring at the connection between the sealing part 31 and the second sealing part 32.

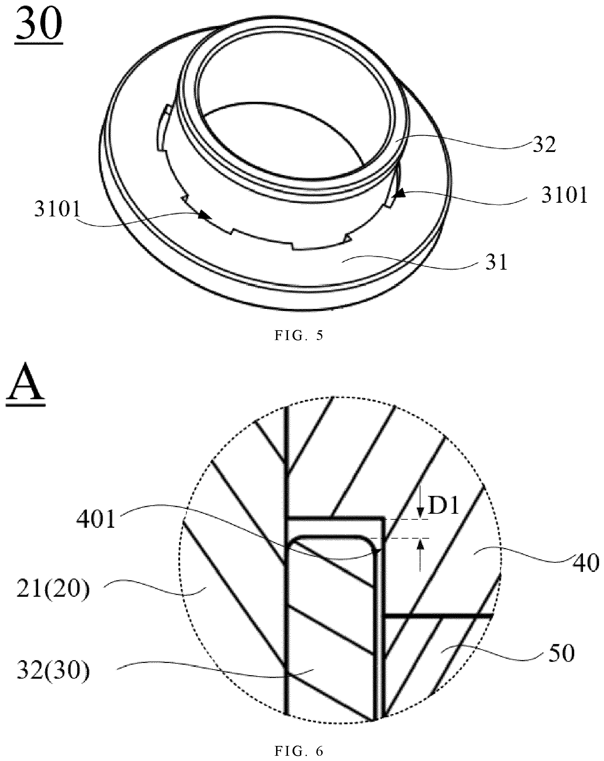

As illustrated in FIG. 5, a plurality of recesses 3101 are arranged at intervals along a circumferential direction of the second sealing part 32. A shape of the recesses 3101 may be one of cylindrical, prismatic, and hemispherical. The recesses 3101 may be arranged in a regular shape, or may have an irregular shape, so that the plurality of recesses 3101 along the outer periphery of the second sealing part 32 accommodate deformation occurring at the connection between the first sealing part 31 and the second sealing part 32.

The sealing component 30 may be made of fluororubber material. The sealing component 30 made of fluororubber material has good chemical resistance, making the sealing component 30 particularly suitable for sealing of the battery.

As illustrated in FIG. 1 to FIG. 3, the pole 20 further includes a pole riveting part 23. The pole riveting part 23 is provided on a second end of the pole connecting part 21, and the pole riveting part 23 is located on a side of the end plate 12 away from the lateral wall 11.

Based on an arrangement of the pole riveting part 23, the pole 20 of the battery 100 can be connected to the housing 10 of the battery 100 by riveting to ensure a connection strength between the pole 20 and the housing 10.

There is a first difference between a radius of the pole riveting part 23 and a radius of the pole connecting part 21. The first difference ranges from 0.3 mm to 0.8 mm. The first difference may be specifically 0.3 mm, 0.35 mm, 0.4 mm, 0.45 mm, 0.5 mm, 0.55 mm, 0.6 mm, 0.65 mm, 0.7 mm, 0.75 mm, or 0.8 mm. A value of the first difference is controlled from 0.3 mm to 0.8 mm to reduce the risk of cracking due to expansion of the pole riveting part 23.

As illustrated in FIG. 1 to IG. 3, the battery 100 further includes a riveting component 40. The riveting component 40 is at least partially located between the pole riveting part 23 and the end plate 12. A surface of the riveting component 40 close to the end plate 12 is provided with a first accommodation groove 401. The first end of the second sealing part 32 of the sealing component 30 is connected to the first sealing part 31, and the second end of the second sealing part 32 is accommodated in the first accommodation groove 401. The second sealing part 32 is embedded and matched with the first accommodation groove 401 to achieve sealing between the pole 20 and the housing 10 to prevent electrolyte leakage.

As illustrated in FIG. 6, there is a first reserved gap D 1 between the second end of the second sealing part 32 and a bottom wall of the first accommodation groove 401. Based on an arrangement of the first reserved gap D1, the riveting component 40 provides an accommodation space for deformation of the second sealing part 32. On a condition that any one or a combination of two of the pole connecting part 21 and the pole riveting part 23 of the pole 20 expands and squeezes the second sealing part 32 of the sealing component 30, the second sealing part 32 deforms to fill the accommodation space formed by the riveting component 40 based on the first reserved gap D1, thereby relieving the second sealing part 32 from directly squeezing the riveting component 40 due to any one or a combination of two of the expansion force of the pole connecting part 21 and the expansion force of the pole riveting part 23 of the pole 20, reducing the risk of deformation and cracking of the riveting component 40, and improving the stability of the battery 100.

The first reserved gap D1 ranges from 0.1 mm to 0.4 mm. For example, the first reserved gap D1 may specifically be 0.1 mm, 0.15 mm, 0.2 mm, 0.25 mm, 0.3 mm, 0.35 mm, or 0.4 mm. A value of the first reserved gap D1 is controlled from 0.1 mm to 0.4 mm to ensure that when the pole connecting part 21 expands and squeezes the second sealing part 32, the accommodation space formed by the riveting component 40 based on the arrangement of the first reserved gap D1 can accommodate the deformation of the second sealing part 32, so as to release the deformation force generated by the extrusion of the second sealing part 32 and reduce an amount of deformation of the riveting component 40 caused by the deformation force of the second sealing part 32, thereby reducing the risk of cracking due to deformation of the riveting component 40 and improving the stability of the battery 100.

As illustrated in FIG. 1 to FIG. 3, a surface of the riveting component 40 away from the end plate 12 is provided with a second accommodation groove 402, and the pole riveting part 23 of the pole 20 is accommodated in the second accommodation groove 402 to realize the connection between the pole riveting part 23 and the riveting component 40. A depth h1 of the second accommodation groove 402 is greater than a thickness h2 of the pole riveting part 23, preventing the pole riveting part 23 from protruding from the second accommodation groove 402 to the surface of the riveting component 40 away from the end plate 12, and facilitating a connecting component to weld a plurality of batteries 100 so that the plurality of batteries 100 are connected in series, or in parallel, or in series and in parallel to form a battery module. A width of the second accommodation groove 402 ranges from 3.4 mm to 7.0 mm, so as to realize a riveting fixation between the riveting component 40 and the pole 20. The width of the second accommodation groove 402 should be greater than a diameter of the pole connecting part 21. The depth h1 of the second accommodation groove 402 ranges from 0.5 mm to 1.2 mm to form an escape space for the expansion of the pole 20 in a thickness direction of the pole riveting part 23.

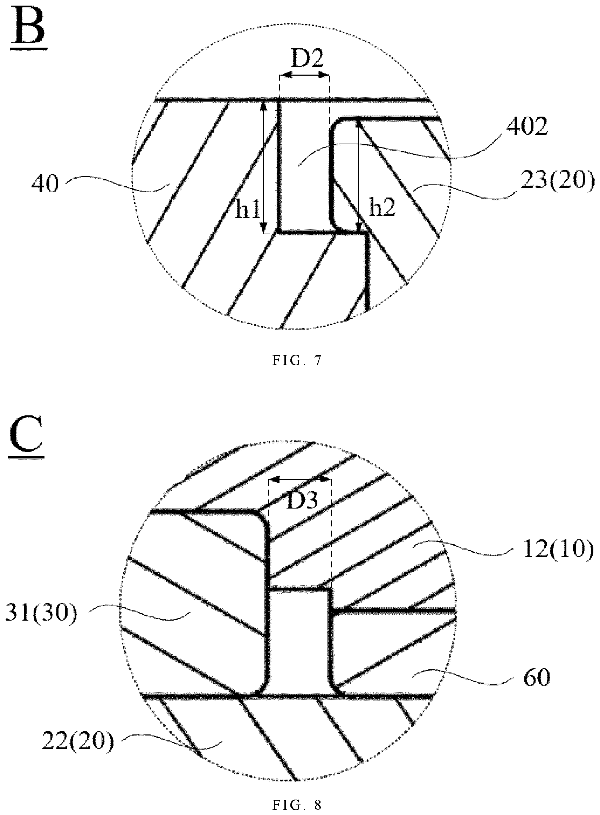

As illustrated in FIG. 7, there is a second reserved gap D2 between a side wall of the second accommodation groove 402 and an outer edge of the pole riveting part 23. Based on an arrangement of the second reserved gap D, the riveting component 40 provides an accommodation space for the pole riveting part 23 to expand. The pole riveting part 23 expands to fill the accommodation space formed by the riveting component 40 based on the second reserved gap D2, relieving the pole riveting part 23 from directly squeeze the riveting component 40 due to expansion force generated by the expansion of the pole riveting part 23, reducing the risk of cracking due to deformation of the riveting component 40, and improving the stability of the battery 100.

The second reserved gap D2 ranges from 0.25 mm to 0.6 mm. For example, the second reserved gap D2 may be specifically 0.25 mm, 0.3 mm, 0.35 mm, 0.4 mm, 0.45 mm, 0.5 mm, 0.55 mm, or 0.6 mm. A value of the second reserved gap D2 is controlled from 0.25 mm to 0.6 mm to ensure that when the pole riveting part 23 expands to compress the riveting component 40, the accommodation space formed by the riveting component 40 based on the arrangement of the second reserved gap D2 can accommodate the expansion and deformation of the pole riveting part 23, so as to release the deformation force generated by the expansion of the pole riveting part 23, and reduce an amount of deformation of the riveting component 40 due to the deformation force of the pole riveting part 23, thereby reducing the risk of cracking due to the deformation of the riveting component 40 and increasing the stability of the battery 100.

As illustrated in FIG. 1 to FIG. 3, the battery 100 further includes an outer insulation component 50. The outer insulation component 50 is disposed around the second sealing part 32 and at least partially located between the riveting component 40 and the end plate 12. The outer insulation component 50 is provided with a third through hole 501. The third through hole 501 and the first through hole 101 are co-centrically arranged. The second sealing part 32 penetrates the third through hole 501, and a hole wall of the third through hole 501 is in contact with an outer periphery of the second sealing part 32. The outer insulation component 50 is configured to insulate the riveting component 40 and the end plate 12 to ensure an insulation connection between the pole 20 and the housing 10.

As illustrated in FIG. 1 to FIG. 3, a third accommodation groove 102 is provided on a surface of the end plate 12 close to the outer insulation component 50. The third accommodation groove 102 is provided around the outer periphery of the second sealing part 32. Part of the outer insulation component 50 is accommodated in the third accommodation groove 102. The third accommodation groove 102 and the first through hole 101 are co-centrically arranged. The outer insulation component 50 is embedded and matched with the third accommodation groove 102 to realize the clamping and fixing of the outer insulation component 50 and the end plate 12 and ensure the insulation connection between the pole riveting part 23 and the end plate 12, thereby realizing the pole 20 insulated from the housing 10.

As illustrated in FIG. 1 to FIG. 3, the battery 100 further includes an inner insulation component 60. The inner insulation component 60 is at least partially located between the pole limiting part 22 and the end plate 12. The inner insulation component 60 is configured to insulate the end plate 12 and the adapting piece 70. The inner insulation component 60 is provided with a second through hole 601. The second through hole 601 and the first through hole 101 are co-centrically arranged. The first sealing part 31 at least partially passes through the second through hole 601 to ensure the sealing and insulation between the pole 20 and the end plate 12.

As illustrated in FIG. 8, there is a third reserved gap D3 between a hole wall of the second through hole 601 and an outer peripheral of the first sealing part 31. The first sealing part 31 is provided with an accommodating space for deformation based on an arrangement of the third reserved gap D3. On a condition that any one or a combination of two of the pole connecting part 21 and the pole limiting part 22 of the pole 20 expands to squeeze the first sealing part 31, the first sealing part 31 deforms to fill the accommodation space formed based on the third reserved gap D3, thereby relieving the first sealing part 31 from directly squeeze the inner insulation component 60 due to any one or a combination of two of the expansion force generated by the pole connecting part 21 and the expansion force generated by the pole limiting part 22, thereby reducing the risk of cracking due to deformation of the inner insulation component 60 and improving the stability of the battery 100.

The third reserved gap D3 ranges from 0.1 mm to 0.4 mm. For example, the first reserved gap D1 may be specifically 0.1 mm, 0.15 mm, 0.2 mm, 0.25 mm, 0.3 mm, 0.35 mm, 0.4 mm. A value of the third reserved gap D3 is controlled from 0.1 mm to 0.4 mm to ensure that when any one or a combination of two of the pole connecting part 21 and the pole limiting part 22 expands to compress the first sealing part 31, the accommodation space formed by the first sealing part 31 based on the arrangement of the third reserved gap D3 can accommodate the deformation of the first sealing part 31, so as to release the deformation force generated by the first sealing part 31 due to compressed, and reduce an amount of deformation of the inner insulation component 60 due to the deformation force of the first sealing part 31, thereby reducing the risk of cracking due to the deformation of the inner insulation component 60 and increasing the stability of the battery 100.

The embodiments of the present disclosure are introduced in detail above. Specific examples are used in this paper to illustrate the principles and implementation methods of the present disclosure. The description of the above embodiments is only used to help understand the method of the present disclosure and core ideas of the present disclosure. At the same time, for those skilled in the art, there will be changes in the specific implementation mode and application scope based on the ideas of the present disclosure. In summary, the content of this description should not be understood as a limitation of the present disclosure.

## Claims

1. A battery (100), **characterized by** comprising:
a housing (10), comprising a lateral wall (11) and an end plate (12) connected to the lateral wall (11), wherein the end plate is provided with a first through hole (101);
a pole (20), comprising a pole connecting part (21) and a pole limiting part (23), wherein the pole connecting part (21) passes through the first through hole (101), the pole limiting part (23) is provided on a first end of the pole connecting part (21), and the pole limiting part (23) is located on a side of the end plate (12) close to the lateral wall (11); and
a sealing component (30), comprising a first sealing part (31) and a second sealing part (32), wherein the first sealing part (31) is arranged around the pole connecting part (21) and located between the pole limiting part (23) and the end plate (12), and a first end of the second sealing part (32) is connected to the first sealing part (31); the second sealing part (32) is arranged around the pole connecting part (21), and the second sealing part (32) is interference-fitted with an inner sidewall of the first through hole (101); and at a position close to a connection between the first sealing part (31) and the second sealing part (32), the first sealing part (31) is provided with at least one recess (3101) on a side surface away from the first end of the pole connecting part (21), and the recess (3101) is configured to provide a deformation space when the first sealing part (31) is squeezed.

2. The battery (100) according to claim 1, **characterized in that** the recess (3101) is arranged around an outer periphery of the second sealing part (32).

3. The battery (100) according to claim 1 or claim 2, **characterized in that** a plurality of recesses (3101) are arranged at intervals along a circumferential direction of the second sealing part (32).

4. The battery (100) according to any one of claim 1 to claim 3, **characterized in that** the pole (20) further comprises a pole riveting part (23) provided on a second end of the pole connecting part (21), and the pole riveting part (23) is located on a side of the end plate (12) away from the lateral wall (11).

5. The battery (100) according to claim 4, **characterized in that** there is a first difference between a radius of the pole riveting part (23) and a radius of the pole connecting part (21), and the first difference ranges from 0.3 mm to 0.8 mm.

6. The battery (100) according to claim 4 or claim 5, **characterized in that** the battery (100) further comprises a riveting component (40), the riveting component (40) is at least partially located between the pole riveting part (23) and the end plate (12), a surface of the riveting component (40) close to the end plate (12) is provided with a first accommodation groove (401), and a second end of the second sealing part (32) is accommodated in the first accommodation groove (401).

7. The battery (100) according to claim 6, **characterized in that** there is a first reserved gap (D1) between the second end of the second sealing part (32) and a bottom wall of the first accommodation groove (401), and the first reserved gap (D1) ranges from 0.1 mm to 0.4 mm.

8. The battery (100) according to claim 6 or claim 7, **characterized in that** a surface of the riveting component (40) away from the end plate (12) is provided with a second accommodation groove (402), and the pole riveting part (23) is accommodated in the second accommodation groove (402).

9. The battery (100) according to claim 8, **characterized in that** there is a second reserved gap (D2) between a side wall of the second accommodation groove (402) and an outer edge of the pole riveting part (23), and the second reserved gap (D2) ranges from 0.25 mm to 0.6 mm.

10. The battery (100) according to any one of claim 6 to claim 9, **characterized in that** the battery (100) further comprises an outer insulation component (50), the outer insulation component (50) is disposed around the second sealing part (32), and the outer insulation component (50) is at least partially located between the riveting component (40) and the end plate (12).

11. The battery (100) according to claim 10, **characterized in that** a surface of the end plate (12) close to the outer insulation component (50) is provided with a third accommodation groove (102), the third accommodation groove is provided around an outer periphery of the second sealing part (32), and part of the outer insulation component (50) is accommodated in the third accommodation groove.

12. The battery (100) according to any one of claim 1 to claim 11, **characterized in that** the battery (100) further comprises an inner insulation component (60), the inner insulation component (60) is at least partially located between the pole limiting part (23) and the end plate (12), the inner insulation component (60) is provided with a second through hole (601), and the first sealing part (31) at least partially passes through the second through hole (601).

13. The battery (100) according to claim 12, **characterized in that** there is a third reserved gap (D3) between a hole wall of the second through hole (601) and an outer periphery of the first sealing part (31), and the third reserved gap (D3) ranges from 0.1 mm to 0.4 mm.
